# EUROPÄISCHE PATENTSCHRIFT

(11) **EP 0 951 625 B1**
(45) Veröffentlichungstag und Bekanntmachung des Hinweises auf die Patenterteilung: **06.03.2002**
(21) Anmeldenummer: 98962211.3
(22) Anmeldetag: 05.11.1998
(51) Int. Cl.: F16L 43/00, F16L 41/02, F16L 47/00

(54) **Formstück zur Fluid-Strömungsumlenkung**
Shaped piece for diverting fluid flow
Pièce façonnée pour dévier l'écoulement d'un fluide

(30) Priorität: 13.11.1997 DE 29720140 U
(43) Veröffentlichungstag der Anmeldung: 27.10.1999
(73) Patentinhaber: COMET-Pumpen Systemtechnik GmbH & Co. KG, 37308 Pfaffschwende (DE)
(72) Erfinder: Ashauer, Ernst, Dipl.-Ing., 69469 Weinheim (DE)
(74) Vertreter: Gramm, Werner, Prof. Dipl.-Ing.
(86) Internationale Anmeldenummer: DE9803224
(87) Internationale Veröffentlichungsnummer: WO9926011

(56) Entgegenhaltungen:
- FR-A- 1 290 344
- FR-A- 2 112 808
- FR-A- 2 288 930
- GB-A- 282 316

## Beschreibung

Die Erfindung betrifft ein Formstück zur Strömungsumlenkung eines Fluids auf kleinem Raum, mit einer mantelseitig geschlossenen Fluidstromführung in Form eines gekrümmten Fluidkanals, der in Anschlüsse für weiterführende Leitungssysteme übergeht, und der eine voll ausgezundete Stzömungsinnenbahn aufweist.

Bei Formstücken, die der Umlenkung von Fluidströmen auf kleinem Raum dienen, insbesondere bei Formstücken mit einer 90°-Strömungsumlenkung, ist die Stromführung aufgrund der mechanischen Herstellung meist scharfwinklig ausgeführt. Dies führt im Umlenkbereich in der Strömungsaußenbahn zu einem die Strömung einengenden Außenwirbel und auf der Innenseite der Stromumlenkung zu einem Strömungsabriß, der zu besonders schädlichen Wirbeln führt, die die Strömung einschnüren und Verluste im Mengentransport des Fluids bewirken.

Die Strömungsverluste betragen bis zu 30 % gegenüber einem geradeaus verlaufenden Fluidstrom.

Bei der Herstellung derartiger Umlenkungsformstücke, die eine Umlenkung auf kleinem Raum bewirken, wird die im Regelfall durch eine kreisrunde Bohrung gebildete Stromführungsöffnung durch Zerspanen, bei aus Kunststoff entstehenden Formstücken vorzugsweise durch Geradeausziehen von Kernen hergestellt. Bogenformungszüge verlangen deutlich größere Abmessungen und bedingen schwierige Anschlüsse an weiterführende Rohrsysteme oder Schläuche. Aus Rohren gebogene Transportbahnen der Fluidströme verlangen große geometrische Abmessungen.

Es ist grundsätzlich möglich, Formstücke kleiner Abmessung mit voll ausgerundeter Stromführung mit Hilfe zerfallender Kernteile herzustellen, wie es beim Guß mit Sandkernen oder beim Spritzguß mit Ausschmelzteilen bekannt ist. Diese Verfahren sind jedoch sehr kostspielig und überdies für kleinere Formteile wenig geeignete (siehe z.B. das Dokument FR-A-2 112 808).

Der Erfindung liegt die Aufgabe zugrunde, ein Formstück der eingangs beschriebenen Bauart zu konzipieren, das eine verbesserte Strömungsführung aufweist und sich mit vertretbarem Aufwand herstellen läßt.

Ausgehend von dem eingangs definierten Formstück wird diese Aufgabe erfindungsgemäß dadurch gelöst, daß der gekrümmte Fluidkanal in der Krümmungsebene offen ausgebildet und hier durch einen Deckel mantelseitig geschlossen ist, der auf dem Grundkörper des Formstücks abdichtend festgelegt ist.

Dabei kann der Deckel eine zwischen die beiden Kanalwandungen eingeschobene Deckelleiste aufweisen. In Verbindung hiermit ist es ferner vorteilhaft, wenn der Boden des gekrümmten Fluidkanals im Querschnitt etwa halbkreisförmig ausgebildet und von der im Querschnitt ebenfalls etwa halbkreisförmig komplementär ausgebildeten Unterseite der genannten Deckelleiste zur Bildung eines kreisrunden Fluidkanals übergriffen ist.

Bei der Herstellung eines erfindungsgemäßen Formstücks bleibt dieses im Bereich der Fluidumlenkung in der Umlenkungsebene geöffnet und zwar durch Einbringen eines entsprechend festen Kernes. Dabei sind die Anschlüsse für die weiterführenden Leitungssysteme in bekannter Weise geradlinig ausgeführt und bei Kunststoffteilen z. B. durch einen geraden Kernzug geformt. In der erfindungsgemäß vorgesehenen Öffnung läßt sich der Fluidkanal in idealer Weise ausformen, also insbesondere mit einer voll ausgerundeten Strömungsinnenbahn versehen. Anschließend wird die Kanalöffnung mit dem entsprechend ideal ausgeformten Deckel geschlossen. Dabei kann dieses Verschließen durch Verschrauben unter Anwendung von Dichtmitteln erfolgen. Es ist aber auch möglich, den Deckel mit dem Grundkörper zu verkleben. Bestehen Deckel und Grundkörper aus Kunststoff, lassen sie sich in einfacher und kostengünstiger Weise durch Ultraschallverschweißung miteinander verbinden.

Erfindungsgemäße Formstücke können als Winkelstück, also für eine 90°-Umlenkung oder aber auch als T-Stück ausgebildet sein. Zwar führt bereits die Verwendung eines Y-Formstücks zu einer gewissen Verbesserung bei der Einschnürung des Fluidstromes, da sich der Abriß der Strömung und die Ausbildung eines Rundwirbels durch Verkleinerung des Umlenkwinkels auf z. B. 45° verringern; dennoch müssen weiterhin beträchliche Strömungsverluste in Kauf genommen werden. Ein erfindungsgemäß ausgebildetes T-Stück mit 90°-Umlenkung weist geringere Strömungsverluste auf als ein herkömmlicher Y-förmiger Abzweig unter 45°.

Weitere Merkmale der Erfindung sind Gegenstand der Unteransprüche und werden in Verbindung mit weiteren Vorteilen der Erfindung anhand zweier Ausführungsbeispiele näher erläutert.

In der Zeichnung sind zwei als Beispiele dienende Ausführungsformen der Erfindung dargestellt. Es zeigen:
- **Figur 1**: in Draufsicht und zum Teil im Längsschnitt den Grundkörper eines Formstücks mit einem gekrümmten, oben offenen Fluidkanal;
- **Figur 2**: einen Schnitt gemäß der Linie II - II in Figur 1;
- **Figur 3**: in Unteransicht einen Deckel zum Verschließen des gekrümmten Fluidkanals gemäß Figur 1;
- **Figur 4**: einen Schnitt gemäß der Linie IV - IV in Figur 3;
- **Figur 5**: in Draufsicht ein T-förmiges Formstück;
- **Figur 6**: einen Schnitt gemäß der Linie VI - VI in Figur 5;
- **Figur 7**: in Unteransicht einen Deckel zum Verschließen der gekrümmten Fluidkanäle im T-Stück gemäß Figur 5 und
- **Figur 8**: einen Schnitt gemäß der Linie VIII - VIII in Figur 7.

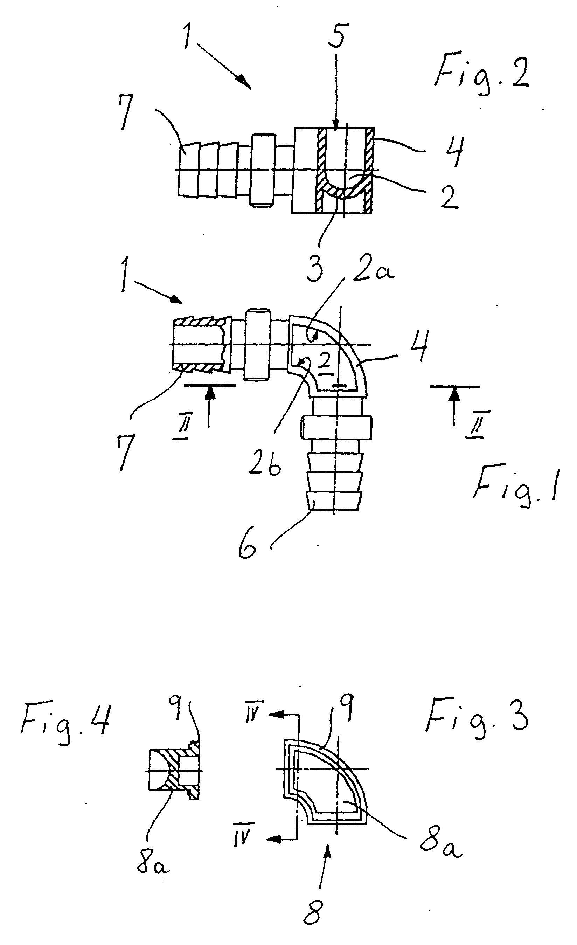

Figur 1 zeigt den Grundkörper 1 eines Formstücks zur Strömungsumlenkung eines Fluids um 90°. Dieser Grundkörper 1 weist einen gekrümmten Fluidkanal 2 auf, der in seiner Krümmungsebene, die in Figur 1 die Zeichnungsebene ist, offen ausgebildet ist. Figur 2 läßt erkennen, daß dieser gekrümmter Fluidkanal 2 im Querschnitt etwa U-förmig ausgebildet ist, wobei der U-Steg 3 halbkreisförmig ausgebildet ist, während die beiden U-Schenkel 4 die obere Kanalöffnung 5 begrenzen.

Figur 1 läßt ferner erkennen, daß der gekrümmte Fluidkanal 2 nicht nur eine voll ausgerundete Strömungsaußenbahn 2a, sondern vor allem auch eine optimale Ausrundung seiner Strömungsinnenbahn 2b aufweist.

Der gekrümmte, oben offene Fluidkanal 2 geht in von vorneherein mantelseitig geschlossene Anschlüsse 6, 7 für weiterführende Leitungssysteme über.

Zum Verschließen der Kanalöffnung 5 ist ein Deckel 8 vorgesehen, der in Figur 3 in Unteransicht dargestellt ist. In dem dargestellten Ausführungsbeispiel weist der Deckel 8 eine zwischen die beiden durch die U-Schenkel 4 gebildeten Kanalwandungen einschiebbare Deckelleiste 8a auf, deren Unterseite im Querschnitt ebenfalls etwa halbkreisförmig und zwar komplementär zu dem den Kanalboden bildenden U-Steg 3 ausgebildet ist.

Der mit seiner Deckelleiste 8a in die Kanalöffnung 5 eingeschobene Deckel 8 liegt in seiner Schließlage mit einem Kragen 9 auf den die Kanalwandung bildenden U-Schenkeln 4 auf, wobei die halbkreisförmig ausgebildete Unterseite der Deckelleiste 8a den Kanalboden 3 übergreift und mit diesem einen kreisrunden Fluidkanal bildet.

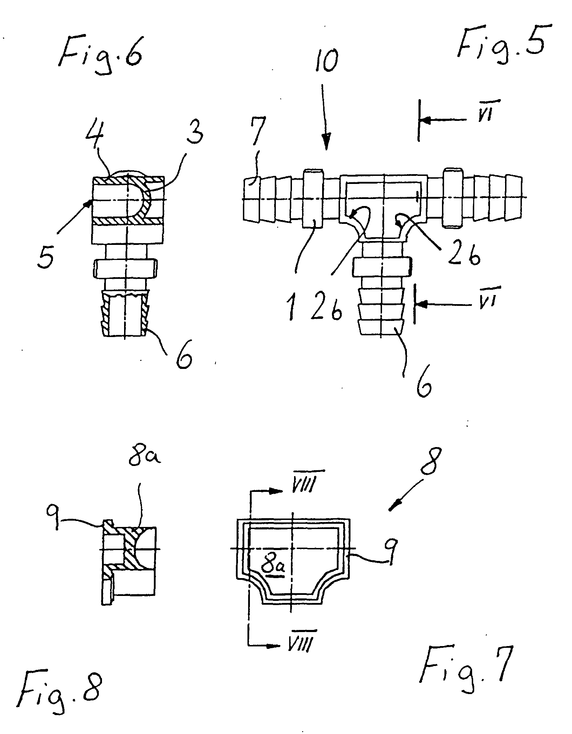

Die Figuren 5 bis 8 zeigen in Darstellungen gemäß den Figuren 1 bis 4 ein T-Stück 10 als Formstück. Auch hier gibt die zweiteilige, aus Grundkörper 1 und Deckel 8 bestehende Ausführungsform die Möglichkeit, die Strömungsinnenbahn 2b optimal auszurunden und so den Strömungswiderstand soweit zu verringern, daß er noch unter dem eines Y-förmigen Formstücks liegt.

## Patentansprüche

1. Formstück zur Strömungsumlenkung eines Fluids auf kleinem Raum, mit einer mantelseitig geschlossenen Fluidstromführung in Form eines gekrümmten Fluidkanals (2), der in Anschlüsse (6, 7) für weiterführende Leitungssysteme übergeht und der eine voll ausgerundete Strömungsinnenbahn (2b) aufweist, **dadurch gekennzeichnet, daß** der gekrümmte Fluidkanal (2) in der Krümmungsebene offen (5) ausgebildet und hier durch einen Deckel (8) mantelseitig geschlössen ist, der auf dem Grundkörper (1) des Formstücks abdichtend festgelegt ist.

2. Formstück nach Anspruch 1, **dadurch gekennzeichnet, daß** der Deckel (8) auf den Kanalwandungen (4) des gekrümmten Fluidkanals (2) aufliegt.

3. Formstück nach Anspruch 1 oder 2, **dadurch gekennzeichnet, daß** der Deckel (8) eine zwischen die beiden Kanalwandungen (4) eingeschobene Deckelleiste (8a) aufweist.

4. Formstück nach Anspruch 3, **dadurch gekennzeichnet, daß** der Boden (3) des gekrümmten Fluidkanals (2) im Querschnitt etwa halbkreisförmig ausgebildet und von der im Querschnitt ebenfalls etwa halbkreisförmig komplementär ausgebildeten Unterseite der genannten Deckelleiste (8a) zur Bildung eines kreisrunden Fluidkanals übergriffen ist.

5. Formstück nach einem der vorhergehenden Ansprüche, **dadurch gekennzeichnet, daß** der Deckel (8) unter Zwischenschalten von Dichtmitteln mit dem Grundkörper (1) verschraubt ist.

6. Formstück nach einem der Ansprüche 1 bis 4, **dadurch gekennzeichnet, daß** der Deckel (8) mit dem Grundkörper (1) verklebt ist.

7. Formstück nach einem der Ansprüche 1 bis 4, **dadurch gekennzeichnet, daß** Deckel (8) und Grundkörper (1) aus Kunststoff bestehen und durch Ultraschallverschweißung miteinander verbunden sind.

## Claims

1. Shaped piece for diverting the flow of a fluid in a small space, the said shaped piece having a fluid-flow guide, which is closed on the casing side, in the form of a curved fluid duct (2) which merges into connections (6, 7) for continuing line systems and has a completely rounded inner flow path (2b), **characterised in that** the curved fluid duct (2) is of open construction (5) in the plane of curvature and is closed on the casing side at this point by a cover (8) which is secured in position in a sealing manner on the base member (1) of the shaped piece.

2. Shaped piece according to claim 1, **characterised in that** the cover (8) rests on the duct walls (4) of the curved fluid duct (2).

3. Shaped piece according to claim 1 or 2, **characterised in that** the cover (8) has a cover strip (8a) which is inserted between the two duct walls (4).

4. Shaped piece according to claim 3, **characterised in that** the bottom (3) of the curved fluid duct (2) is of approximately semicircular construction in cross-section and has, engaging over it, the underside, which is likewise of approximately semicircular construction in cross-section in a complementary manner, of the said cover strip (8a), in order to form a circular fluid duct.

5. Shaped piece according to one of the preceding claims, **characterised in that** the cover (8) is screwed to the base member (1) with the interpolation of sealing means.

6. Shaped piece according to one of claims 1 to 4, **characterised in that** the cover (8) is bonded to the base member (1).

7. Shaped piece according to one of claims 1 to 4, **characterised in that** the cover (8) and the base member (1) consist of plastic and are connected to one another by ultrasonic welding.

## Revendications

1. Pièce façonnée pour dévier l'écoulement d'un fluide dans un petit espace, comprenant un guidage d'écoulement du fluide, fermé périphériquement, présentant la forme d'un canal fluidique (2) courbe qui donne sur des raccords (6,7) pour des systèmes de conduite menant plus loin, et qui présente un trajet d'écoulement intérieur (2b) complètement arrondi, **caractérisée en ce que** le canal fluidique courbe (2) est réalisé ouvert (5) dans le plan de courbure et y est fermé du côté de la périphérie par un couvercle (8), qui est fixé de façon étanche sur le corps de base (1) de la pièce façonnée.

2. Pièce façonnée selon la revendication 1, **caractérisée en ce que** le couvercle (8) repose sur les parois de canal (4) du canal fluidique courbe (2).

3. Pièce façonnée selon la revendication 1 ou 2, **caractérisée en ce que** le couvercle (8) présente une saillie de couvercle (8a) enfoncée entre les deux parois (4) du canal.

4. Pièce façonnée selon la revendication 3, **caractérisée en ce que** le fond (3) du canal fluidique courbe (2) est réalisé sensiblement semi-circulaire en section transversale, et se trouve coiffé par le côté inférieur, réalisé complémentaire, lui aussi sensiblement semi-circulaire en section transversale, de la saillie précitée (8a), pour constituer un canal fluidique circulaire.

5. Pièce façonnée selon l'une des revendications précédentes, **caractérisée en ce que** le couvercle (8) est vissé avec le corps de base (1) avec interposition de moyens d'étanchéité.

6. Pièce façonnée selon l'une des revendications 1 à 4, **caractérisée en ce que** le couvercle (8) est collé au corps de base (1).

7. Pièce façonnée selon l'une des revendications 1 à 4, **caractérisée en ce que** le couvercle (8) et le corps de base (1) sont en matière plastique et sont reliés l'un à l'autre par soudure aux ultrasons.
